(19) Europäisches Patentamt
European Patent Office
Office européen des brevets

(11) **EP 2 963 448 A1**

(12) **DEMANDE DE BREVET EUROPEEN**

(43) Date de publication:
**06.01.2016 Bulletin 2016/01**

(51) Int Cl.:
***G01S 19/23*** (2010.01)

(21) Numéro de dépôt: **15174550.2**

(22) Date de dépôt: **30.06.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **30.06.2014 FR 1401469**

(71) Demandeur: **SAGEM DEFENSE SECURITE**
**92100 Boulogne Billancourt (FR)**

(72) Inventeurs:
• **CHAMINADAS, Francis**
**92100 BOULOGNE-BILLANCOURT (FR)**
• **FOREST, Vincent**
**92100 BOULOGNE-BILLANCOURT (FR)**

(74) Mandataire: **Regimbeau**
**20, rue de Chazelles**
**75847 Paris Cedex 17 (FR)**

(54) **PROCÉDÉ DE CALIBRAGE DU TEMPS DE PROPAGATION D'UN RÉCEPTEUR GNSS**

(57) L'invention concerne un procédé de calibrage d'un module récepteur GNSS comportant au moins deux entrées radiofréquence adaptées pour recevoir des signaux GNSS à une ou plusieurs fréquences, un module de traitement GNSS adapté pour mesurer des temps de propagation des signaux GNSS entre le satellite émetteur et le module récepteur, et au moins deux voies analogiques entre lesdites entrées radiofréquence et le module de traitement, caractérisé en ce que :
- en amont de chaque voie analogique, on module en amplitude un signal GNSS par un signal de référence, de manière à générer au moins une porteuse et deux sous-porteuses différentes ;
- en aval de chaque voie analogique, on mesure le différentiel de phase initiale entre les au moins deux signaux sous-porteuses différentes ;
- on en déduit le temps de propagation du signal GNSS dans le récepteur dans chaque voie analogique du récepteur.

**FIG. 1**

## Description

## DOMAINE DE L'INVENTION

La présente invention concerne le domaine des systèmes de radionavigation par satellite et plus particulièrement la détermination de la position d'un récepteur utilisant des pseudo-distances mesurées à partir des signaux envoyés par des satellites.

## ÉTAT DE LA TECHNIQUE

Les systèmes de positionnement par satellite mettent en oeuvre plusieurs satellites transmettant leurs positions par des signaux radioélectriques à un récepteur. Ce récepteur mesure les distances, dites pseudo-distances, qui le séparent des satellites à partir des temps de propagation du signal radiofréquence émis par chaque satellite. La localisation du récepteur est effectuée par une technique de trilatération et cette localisation est d'autant plus précise que les positions des satellites sont connues avec précision et que les mesures des pseudo-distances faites par le récepteur sont précises. Les positions des satellites sont déterminées à partir d'un réseau de stations sol de poursuite indépendant des récepteurs de positionnement. Elles sont communiquées aux récepteurs de positionnement par les satellites eux-mêmes par les données du message de navigation modulant les signaux émis. Les pseudo-distances sont déduites par les récepteurs à partir des retards apparents présentés par les signaux reçus. Ces signaux sont datés à l'émission par les horloges des satellites, qui sont synchronisées sur le temps système, et à la réception par l'horloge du récepteur. L'horloge du récepteur peut présenter un biais par rapport au temps système. Les distances déduites des temps de propagation ainsi mesurés sont appelées pseudo-distances car elles sont entachées d'une erreur commune pouvant être importante, due au biais de l'horloge du récepteur par rapport au temps système GNSS. Ce biais est éliminé lors de la résolution du point à condition que les signaux d'au moins quatre satellites soient reçus.

Comme la vitesse de propagation du signal radiofréquence n'est pas constante tout le long du trajet parcouru, en particulier dans l'ionosphère, les distances calculées sont faussées en raison de l'allongement du temps de propagation. Afin de réduire sensiblement les erreurs affectant les mesures du temps de propagation TP, une correction appelée bi-fréquence doit être effectuée. Celle-ci utilise deux signaux émis par chaque satellite dans deux bandes de fréquence différentes qui peuvent être les bandes habituellement notées L1 et L2 dans le système GPS. Ces deux bandes L1 et L2 sont prises comme exemple dans la suite de la description. Les temps de propagation des deux signaux aux fréquences L1 et L2 émis par chaque satellite ne sont pas affectés de la même façon. Ainsi en calculant la différence de temps de propagation entre les signaux aux fréquences L1 et L2, il est possible d'estimer la perturbation réelle.

Les récepteurs bi-fréquence comportent deux voies analogiques distinctes pour traiter chacune des deux bandes de fréquence L1 et L2. Or, le traitement des signaux dans les voies analogiques introduit un accroissement du temps de propagation et cet accroissement n'est pas le même pour chacune des voies analogiques. En effet les éléments des voies analogiques du récepteur et notamment les éléments à bande passante étroite tels que les filtres, présentent des caractéristiques différentes et introduisent en conséquence des temps de propagation différents. De plus, le temps de propagation dans un récepteur dépend de la température et est affecté par le vieillissement des composants du récepteur. Cette différence de temps de propagation dans chacune des voies analogiques du récepteur a pour effet d'introduire un biais dans l'estimation de l'erreur ionosphérique sur chaque satellite, basée sur le différentiel de temps de propagation entre les deux fréquences. L'incertitude sur le temps de propagation des voies L1 et L2 du récepteur, bien que limitée à quelques nanosecondes, se traduit après correction bi-fréquence par des erreurs de localisation de plusieurs mètres.

Le problème se pose également dans le cas d'une architecture de réception GNSS à plusieurs antennes. Les éléments des voies analogiques des différentes antennes peuvent présenter des caractéristiques différentes et introduire un biais dans l'estimation des temps de propagation des signaux GNSS.

Jusqu'ici la solution utilisée pour limiter le biais induit par le temps de propagation dans les différentes voies du récepteur consiste à utiliser des valeurs typiques du temps de propagation dans les voies du récepteur. Cette solution est très limitée puisqu'elle ne prend pas en compte la différence des véritables temps de propagation entre les différentes voies du récepteur.

Une autre solution améliorée a été proposée qui consiste à utiliser des valeurs mesurées en usine de ces paramètres. Cette solution est limitée puisqu'elle ne prend pas en compte les variations induites par les changements de températures ainsi que la dégradation des performances des récepteurs dans le temps. Cette solution impose de lourdes contraintes sur les opérations de maintenance puisqu'elle implique un retour à l'usine pour effectuer un nouveau relevé de mesure en cas de remplacement d'un élément de la chaine d'un récepteur.

Enfin, une autre solution connue consiste à injecter un signal test à l'entrée du récepteur et à mesurer le temps de propagation de ce signal test dans le récepteur. Or, la génération d'un signal test et sa propagation dans le récepteur peut perturber le traitement des signaux GNSS. Cette solution impose donc de fortes contraintes sur l'architecture du récepteur pour maintenir les performances du traitement GNSS en présence d'un signal test.

EXPOSÉ DE L'INVENTION

Un but de l'invention est de compenser les différences de temps de propagation des signaux GNSS dans un récepteur GNSS sans perturber le traitement des signaux GNSS.

À cet effet, l'invention propose un procédé de calibrage d'un module récepteur GNSS comportant au moins une entrée radiofréquence adaptée pour recevoir des signaux GNSS à une ou plusieurs fréquences, un module de traitement GNSS adapté pour mesurer des temps de propagation des signaux GNSS entre le satellite émetteur et le module récepteur, et au moins deux voies analogiques entre lesdites entrées radiofréquence et le module de traitement, caractérisé en ce que :

- en amont de chaque voie analogique, on module en amplitude un signal GNSS par un signal de référence, de manière à générer un signal modulé comprenant une porteuse et au moins deux sous-porteuses différentes (correspondant à trois signaux étalés sur une porteuse principale et deux sous-porteuses différentes, dans la suite de la description, ces trois signaux étalés sont simplement notés : 'signal porteuse' et 'signaux sous-porteuse') ;
- en aval de chaque voie analogique, on mesure le différentiel de la phase initiale entre les au moins deux signaux sous-porteuses ;
- on en déduit le temps de propagation du signal GNSS dans chaque voie analogique du récepteur.

L'invention permet de compenser les différences de temps de propagation dans les différentes voies analogiques d'un récepteur GNSS, aussi bien entre les signaux issus de différentes antennes que entre les signaux de bandes de fréquences différentes.

L'invention est donc applicables aussi bien aux récepteurs multibandes de fréquence, multi-constellations, ou multi-antennes.

L'invention est avantageusement complétée par les caractéristiques suivantes, prises individuellement ou en l'une quelconque de leurs combinaisons techniquement possibles :

- on retranche à la mesure du temps de propagation entre le satellite émetteur et le module récepteur de chaque signal GNSS reçu, le temps de propagation du signal GNSS dans le récepteur dans la voie analogique dans laquelle a circulé le dit signal GNSS ;

- au moins trois canaux (4, 5, 6) du module de traitement GNSS sont alloués à la poursuite en phase d'au moins trois signaux dont une porteuse et deux sous-porteuses différentes ;

- les canaux alloués à la poursuite en phase des signaux sous-porteuses comportent chacun un oscillateur, la mesure du différentiel de la phase initiale des deux signaux sous-porteuses étant réalisée en intégrant le différentiel des signaux de commande numérique des oscillateurs des canaux alloués à la poursuite en phase des deux signaux sous-porteuses ;

- un canal affecté à la poursuite du signal porteuse apporte une aide en fréquence à des canaux affectés à la poursuite d'au moins un signal sous-porteuse ;

- une compensation des données de navigation est effectuée dans le canal d'au moins un signal sous-porteuse par le canal du signal porteuse ;

- on vérifie le synchronisme des canaux affectés aux sous-porteuses en calculant la somme intégrée des commandes numériques des oscillateurs des canaux des sous-porteuses et en vérifiant que cette somme est proche de zéro ;

- on sélectionne parmi les signaux GNSS reçus par l'entrée radiofréquence le signal GNSS offrant le meilleur rapport signal sur bruit pour effectuer les étapes de mesure du différentiel des phases initiales et de déduction du temps de propagation des signaux GNSS dans le récepteur ;

- on réalise les étapes de modulation, de mesure du différentiel des phases initiales et de déduction du temps de propagation des signaux GNSS dans le récepteur, sur des signaux GNSS issus de plusieurs satellites.

L'invention propose également un dispositif de calibrage d'un récepteur GNSS comportant au moins une entrée radiofréquence adaptée pour recevoir des signaux GNSS à une ou plusieurs fréquences, un module de traitement adapté pour mesurer des temps de propagation des signaux GNSS reçus, et au moins deux voies analogiques entre lesdites entrées radiofréquence et le module de traitement, caractérisé en ce qu'il comporte en outre un modulateur d'amplitude positionné en amont du récepteur et adapté pour générer au moins trois signaux comportant une porteuse principale et deux sous-porteuses différentes; et en ce que le module de traitement est adapté pour mesurer le différentiel des phases initiales entre les au moins deux sous-porteuses différentes.

L'invention est avantageusement complétée par les caractéristiques suivantes, prises individuellement ou en l'une quelconque de leurs combinaisons techniquement possibles :

- le module de traitement comporte au moins deux canaux de poursuite comportant chacun une boucle à verrouillage de phase comportant chacune un oscillateur, le signal de commande numérique des oscillateurs étant transmis à deux entrées du soustracteur, la sortie du soustracteur étant transmise en entrée du filtre intégrateur ;

- au moins une des boucles à verrouillage de phase est une boucle de régulation de type boucle de Costas qui démodule le signal de navigation et fournit aux boucles des sous-porteuses le signal de navigation démodulé.

DESCRIPTION DES FIGURES

D'autres objectifs, caractéristiques et avantages sortiront de la description détaillée qui suit en référence aux dessins donnés à titre illustratif et non limitatif parmi lesquels :

- la figure 1 représente schématiquement un module récepteur équipé d'un système de calibrage conforme à un mode de réalisation de l'invention ;
- la figure 2 représente schématiquement des canaux de poursuite d'un signal porteuse et de signaux sous-porteuses du système de calibrage ;
- la figure 3 représente schématiquement des canaux de poursuite d'un signal porteuse et de signaux sous-porteuses avec une aide en fréquence du canal du signal porteuse vers les canaux des signaux sous-porteuses ;
- la figure 4 représente schématiquement des canaux de poursuite du signal porteuse et des signaux sous-porteuses selon l'invention équipé d'un intégrateur différentiel ;
- la figure 5 représente le diagramme des phases initiales des signaux porteuse et sous-porteuse à chaque étape d'un procédé conforme à un mode de réalisation de l'invention ;
- la figure 6 représente schématiquement le canal de poursuite du signal porteuse avec une boucle de régulation de type boucle de Costas fonctionnant en présence des données de navigation et les canaux de poursuite des signaux sous-porteuse de type Costas simplifiée utilisant les données de navigation démodulées par le canal porteuse ;
- la figure 7, représente en partie haute, le temps de propagation dans le récepteur mesuré et en partie basse l'écart type du temps de propagation dans le récepteur mesuré par un procédé selon l'invention sans bruit thermique et avec une durée d'intégration de 1 ms ;
- la figure 8, représente en partie haute, le temps de propagation dans le récepteur mesuré et en partie basse l'écart type du temps de propagation dans le récepteur mesuré par un procédé selon l'invention avec bruit thermique et avec une durée d'intégration de 1 ms ;
- sur la figure 9, les quatre courbes en partie haute représentent le temps de propagation dans le récepteur mesuré et les quatre courbes en partie basse représentent l'écart type du temps de propagation dans le récepteur mesuré par un procédé selon l'invention avec bruit thermique et pour des durées d'intégration comprises entre 512 ms et 4096 ms.

## DESCRIPTION DÉTAILLÉE D'UN OU PLUSIEURS MODES DE RÉALISATION

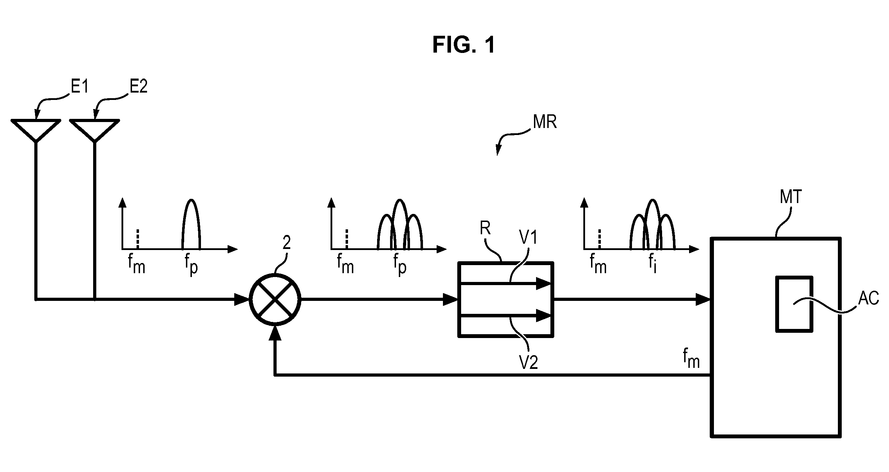

En référence à la figure 1, un module de réception GNSS MR comporte plusieurs entrées radiofréquence E1, E2, un récepteur R et un module de traitement GNSS MT. Chaque entrée radiofréquence E1 et E2 reçoit des signaux GNSS issus de satellites et encodant des données de navigation. Les signaux GNSS reçus sont modulés en amplitude par un signal de référence à une fréquence fm. Le signal de référence est typiquement un signal sinusoïdal. Le module de traitement GNSS MT est adapté pour mesurer le temps de propagation TP des signaux GNSS reçus et en déduire la distance du récepteur au satellite émetteur. Le module de traitement GNSS MT comporte un allocateur de canal AC. La mesure du TP est effectuée après que l'allocateur de canal AC du module de traitement GNSS MT ait permis l'acquisition et la poursuite des signaux GNSS.

Le récepteur R comporte deux voies analogiques V1, V2 distinctes entre chaque entrée radiofréquence E1 et E2 et le module de traitement MT pour traiter chacune une bande de fréquence L1 et L2.

L'invention s'applique bien évidement à n'importe quel récepteur R comportant au moins deux voies analogiques V1, V2, aussi bien aux récepteurs multi-bandes comportant plusieurs voies analogiques pour traiter des signaux dans des bandes de fréquence différentes, qu'aux récepteurs multi-antennes, comportant au moins une voie analogique par antenne.

Le modulateur d'amplitude 2 module les signaux GNSS avec un signal de référence ayant une fréquence fm plus basse que la fréquence porteuse fp des signaux GNSS de manière à générer pour chaque signal GNSS, un signal modulé composé du signal GNSS à la fréquence de la porteuse et de deux signaux supplémentaires identiques au signal GNSS mais à la fréquence des sous-porteuses (une sous-porteuse inférieure à une fréquence fp-fm et une sous-porteuse supérieure à une fréquence fp+fm). Le signal modulé par le modulateur d'amplitude 2 est injecté dans le récepteur R. La sortie du récepteur R est transmise au module de traitement GNSS MT. À noter que le récepteur R effectue une opération de transposition de fréquence de tous les signaux à une fréquence intermédiaire fi plus faible que fp de façon à faciliter le traitement. Les fréquences du signal porteuse et des deux signaux sous-porteuse supérieure et inférieure sont, après transposition respectivement, fi, fi + fm et fi - fm, Le module de traitement GNSS MT transmet la fréquence de modulation fm au modulateur d'amplitude 2.

Le module de traitement GNSS MT mesure le différentiel de phase initiale $\Delta\varphi0$ entre les signaux sous-porteuses et en déduit le temps de propagation $\tau$ du signal GNSS du récepteur GNSS en utilisant le résultat

suivant :

$$\tau = \frac{\Delta\varphi_0}{4 \, . \, \pi \, . \, f_m}$$

À noter que la phase initiale $\tau_0$ de deux signaux sinusoïdaux à des fréquences différentes s'obtient en égalant à zéro le paramètre temps t dans l'expression qui donne sa phase instantanée à savoir :

$$\varphi(t) = 2.\pi.f.t + \varphi_0$$

Dans la suite de la description, une seule bande de fréquence est considérée. Dans le cas de la correction bi-fréquence, le procédé est appliqué indépendamment aux deux bandes de fréquence utilisées.

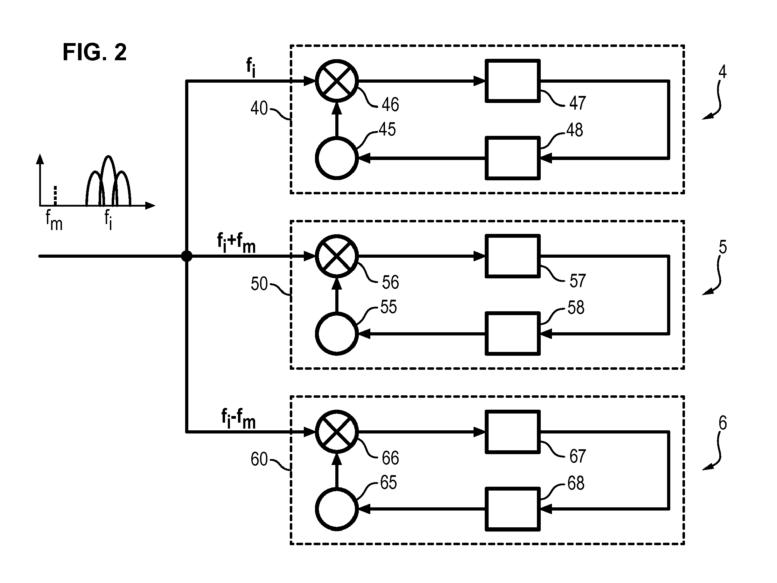

En référence à la figure 2, la porteuse est poursuivie par un canal 4 du module de traitement GNSS MT et l'allocateur de canaux AC du module de traitement GNSS MT positionne deux canaux supplémentaires 5 et 6 pour poursuivre les deux sous-porteuses générées par le modulateur d'amplitude. Les signaux à la fréquence de la porteuse, à la fréquence sous-porteuse supérieure et à la fréquence de la sous-porteuse inférieure sont acquis puis poursuivis en code, en phase et en fréquence par trois canaux différents respectivement 4, 5 et 6 du module de traitement GNSS MT.

Le procédé ne nécessite qu'un seul équipement spécifique à l'entrée du récepteur R à savoir le modulateur d'amplitude 2. Le récepteur R et le module de traitement MT utilisés par le procédé sont des équipements standards qui effectuent le traitement habituel des signaux GNSS.

Chaque canal 4, 5 et 6 comporte une boucle à verrouillage de phase 40, 50 et 60 qui poursuit la phase et donc la fréquence du signal à traiter. La boucle à verrouillage de phase 40, 50 et 60 comprend un oscillateur 45, 55, 65 qui est typiquement un oscillateur à contrôle numérique, un multiplieur 46, 56, 66, un intégrateur 47, 57, 67 et un filtre de compensation 48, 58, 68. Pour des raisons de clarté, l'étalement du signal délivré par l'oscillateur 45, 55, 65 par le code du satellite généré localement et permettant de réaliser l'opération de corrélation, n'est pas représenté sur les figures 2, 3, 4 et 6.

La boucle à verrouillage de phase 40 du canal 4 de la porteuse comporte un oscillateur local 45 contrôlé numériquement et ajusté à la fréquence de la porteuse fi. Un multiplieur 46, jouant le rôle de détecteur en phase réalise le produit du signal issu de l'oscillateur local 46 avec le signal GNSS pour former un système contre-réactionné conçu pour maintenir l'oscillateur local 45 en synchronisme avec le signal de la porteuse. Le signal en sortie du multiplieur 46 est intégré par un filtre intégrateur 47. Le signal en sortie du filtre intégrateur 47 est injecté dans un filtre de compensation 48 puis réinjecté dans l'oscillateur local 45 afin de réguler la fréquence et la phase de la porteuse locale. Les boucles à verrouillage (50, 60) de phase des sous-porteuses sont identiques à celle de la porteuse (40).

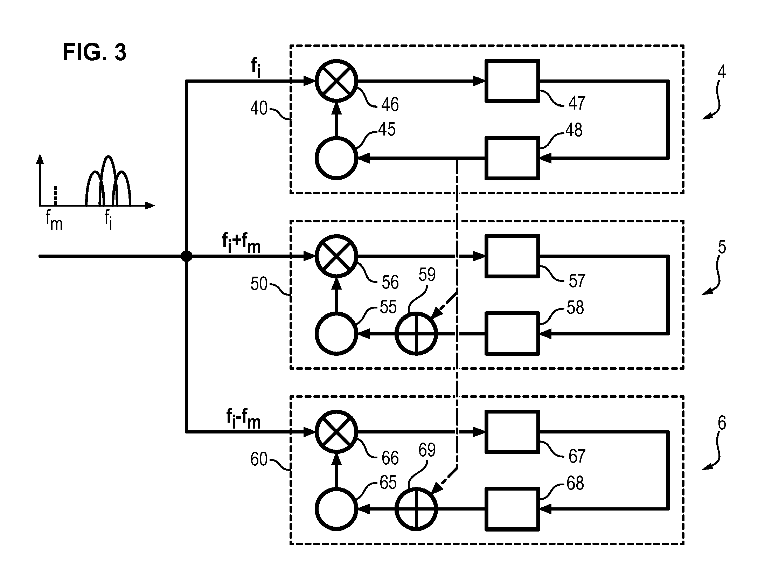

Le signal porteuse et les signaux sous-porteuses ont tous le même code d'étalement et, la fréquence de modulation fm étant connue, les fréquences des signaux sous-porteuses peuvent être déduites de celle du signal porteuse. En référence à la figure 3, le canal affecté à la poursuite du signal porteuse apporte une aide en fréquence aux canaux affectés à la poursuite des signaux aux fréquences des sous-porteuses. Le signal numérique de commande de l'oscillateur 45 de la boucle du canal du signal porteuse est sommé en sortie des filtres de compensation 58, 68 dans des additionneurs 59, 69 afin de commander numériquement les oscillateurs 55 et 65 des canaux poursuivant les signaux sous-porteuses. Les canaux affectés à la poursuite des signaux sous-porteuse ont des boucles de poursuite plus étroites pour compenser la diminution du rapport signal sur bruit due à la modulation d'amplitude. Le rapport signal sur bruit d'un signal porté par une sous-porteuse est typiquement inférieur de 6 dB par rapport au rapport signal sur bruit du signal porté par la porteuse pour un indice de modulation d'amplitude de 100 %.

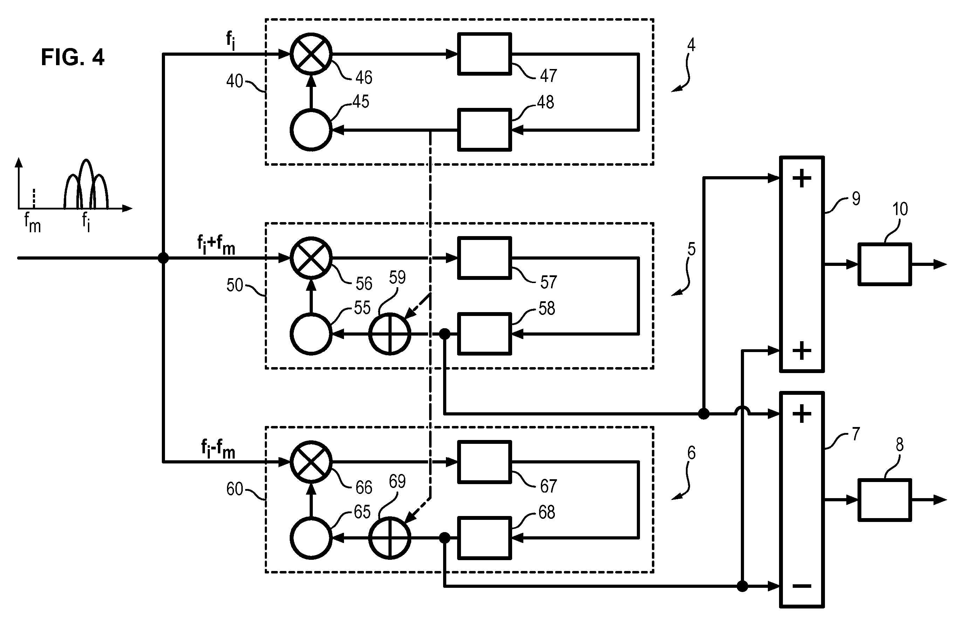

Généralement, la phase du signal porteuse et des signaux sous-porteuse n'est pas directement accessible, en raison de l'utilisation de circuits spécialisés par le traitement GNSS. En référence à la figure 4, on détermine le différentiel de la phase initiale $\Delta\varphi0$ des signaux sous-porteuses en intégrant la différence des signaux de commande numérique de l'oscillateur 65 du canal 6 de la sous-porteuse inférieure et de l'oscillateur 55 du canal 5 de la sous-porteuse supérieure. À cet effet, on injecte le signal issu du filtre de compensation 68 du canal 6 de la sous-porteuse inférieure et le signal issu du filtre de compensation 58 du canal 5 de la sous-porteuse supérieure dans un soustracteur 7 et on injecte le signal issu du soustracteur 7 dans un filtre intégrateur 8.

En sortie du filtre intégrateur 8, on mesure le différentiel de la phase initiale des signaux sous-porteuse :

$$\Delta\varphi_0 = 2.\pi.k_0 \, . \int \Delta N(t).dt$$

$k_0$ est le coefficient de proportionnalité reliant la fréquence des oscillateurs à leur commande numérique

$\Delta$ N est le différentiel des commandes numériques des oscillateurs

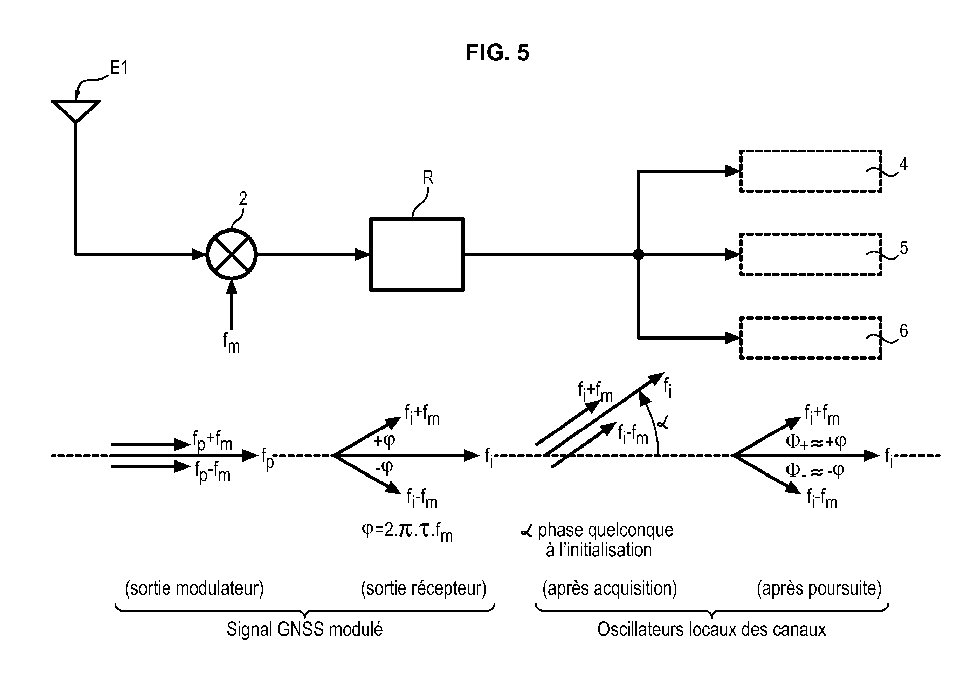

En référence à la figure 5 qui, pour des raisons de clarté, ne représente qu'une voie de traitement analogique, on va maintenant décrire l'évolution des phases initiales à chaque étape d'un procédé en utilisant une représentation vectorielle des différents signaux dans un plan appelé plan des phases initiales ou plus simplement plan des phases. En utilisant cette représentation, chaque signal est représenté par un vecteur qui est l'image de sa phase initiale. Ce vecteur est simplement appelé vecteur image.

En référence à la figure 5, en sortie du modulateur d'amplitude 2, les signaux sous-porteuses et le signal porteuse ont une phase initiale nulle. Dans le plan des phases, les vecteurs image correspondants sont colinéaires.

Après traitement par le récepteur R, les signaux sous-porteuses ont leur phase initiale modifiée par le temps de transit $\tau$ du récepteur d'une quantité de $2.\pi.f_i.\tau$ pour la porteuse, de $2.\pi.(f_i + f_m).\tau$ pour la sous-porteuse supérieure et de $2.\pi.(f_i - f_m).\tau$ pour la sous-porteuse inférieure. Comme la phase initiale de la porteuse est incluse dans celles des sous-porteuses, et que le différentiel des phases initiales est calculé, on peut considérer qu'en sortie du récepteur R la phase initiale de la porteuse est nulle, celle de la sous-porteuse supérieure est de $2.\pi.f_m.\tau$ et celle de la sous-porteuse inférieure est de $-2.\pi.f_m.\tau$. En conséquence dans le plan des phases, les vecteurs image des sous-porteuses ont, par rapport au vecteur image de la porteuse, un écart de phase de même valeur mais de signe opposé (figure 5).

Lors d'une étape de synchronisation en phase initiale des oscillateurs, après acquisition du signal porteuse par le canal 4 et des signaux sous-porteuses par les canaux 5, 6, la phase initiale de leurs oscillateurs sont mises à zéro

Le moment de la synchronisation n'étant pas connu, on peut considérer qu'un écart quelconque $\alpha$ existe entre la phase initiale du signal porteuse et celles des oscillateurs des canaux. En référence à la figure 5, dans le plan des phases, les vecteurs images des oscillateurs des canaux sont colinéaires mais présentent un écart de phase $\alpha$ par rapport au vecteur image du signal porteuse en sortie du récepteur.

L'étape d'asservissement en code et en phase de tous les canaux étant activée, cet écart $\alpha$ tend à s'annuler et au bout d'un certain temps, les phases initiales des oscillateurs sont, aux erreurs transitoires de poursuite et aux erreurs dues au bruit thermique près, égales à celles des signaux qu'ils poursuivent. En référence à la figure 5, dans le plan des phases, les vecteurs image des oscillateurs ont les mêmes positions relatives que celles des vecteurs image des signaux en sortie du récepteur.

Bien qu'il soit possible de déterminer le retard de propagation dans le récepteur en faisant une mesure différentielle de phase initiale entre le signal porteuse et un seul signal sous-porteuse, on réalise avantageusement cette mesure différentielle entre les signaux sous-porteuses afin d'éliminer l'erreur de synchronisation avec le signal porteuse et de compenser les erreurs de traînage des boucles d'asservissement en cas de rampe de fréquence affectant les signaux GNSS, liée par exemple à une accélération, pour des boucles d'asservissement du second ordre.

En référence à la figure 4, le module de traitement GNSS MT, en utilisant un sommateur 9 et un intégrateur 10, calcule la somme intégrée des commandes numériques de l'oscillateur 65 du canal 6 de la sous-porteuse inférieure et de l'oscillateur 55 du canal 5 de la sous-porteuse supérieure, et vérifie l'absence de désynchronisation entre les oscillateurs de la porteuse et des sous-porteuses. Si la somme intégrée des commandes numériques de l'oscillateur 65 du canal 6 de la sous-porteuse inférieure et de l'oscillateur 55 du canal 5 de la sous-porteuse supérieure est différente de zéro, le module de traitement GNSS MT relance la phase de synchronisation de tous les oscillateurs.

Pour réduire la durée de la période transitoire après la synchronisation, on peut avantageusement remplacer la remise à zéro de la phase initiale des oscillateurs des sous-porteuses par une mise à la valeur estimée de leur phase initiale soit $2.\pi.f_m.\tau_{est}$ pour l'oscillateur de sous-porteuse supérieure et $-2.\pi.f_m.\tau_{est}$ pour l'oscillateur de sous-porteuse inférieure, $\tau_{est}$ étant le temps de transit estimé de la voie à calibrer.

Afin d'augmenter le temps d'intégration de la mesure au-delà de la période des données transmises par les satellites, qui est de l'ordre de 20 ms pour les signaux GPS, une compensation des données de navigation est effectuée dans les boucles 50 et 60 des canaux 5 et 6 des sous-porteuses par la boucle 40 du canal 4 de la porteuse. Les données de compensation des boucles des canaux 5 et 6 des sous-porteuses sont issues de la boucle 4 du canal de la porteuse.

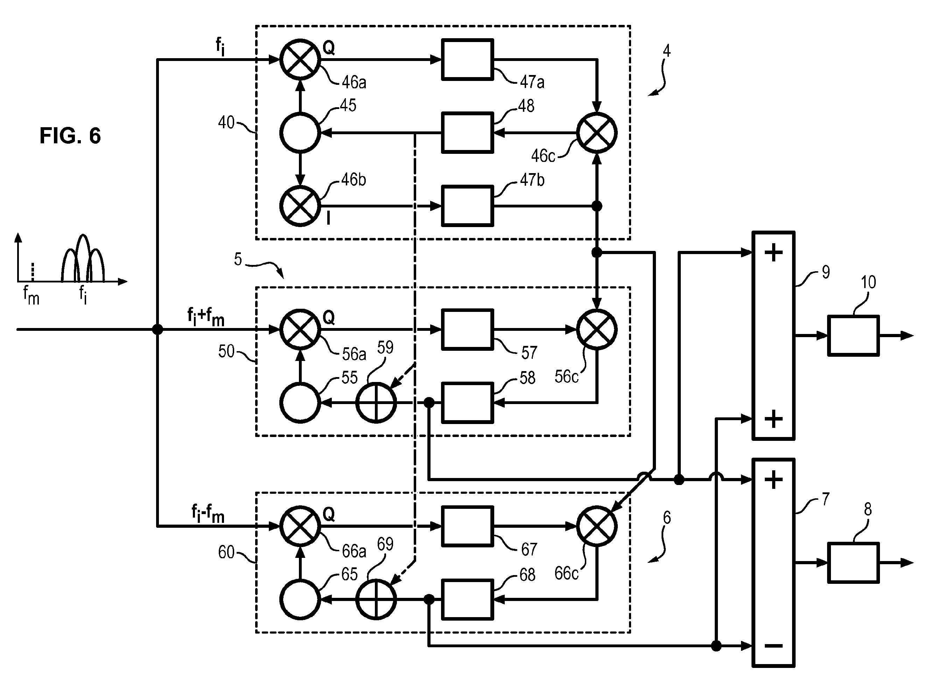

À cet effet et en référence à la figure 6, la boucle à verrouillage de phase 40 du canal 4 de la porteuse est une boucle de régulation de type boucle de Costas qui poursuit la porteuse malgré la présence de données de navigation qui la module en phase. La boucle de régulation 40 comporte un oscillateur local 45 contrôlé numériquement et ajusté à la fréquence du signal porteuse. L'oscillateur local 45 génère localement deux signaux en quadrature de phase. La boucle de régulation 40 comprend un canal Q, comportant un détecteur de phase 46a qui réalise le produit du premier signal en quadrature issu de l'oscillateur local 45 avec le signal porteuse, et un canal I comportant un détecteur de phase 46b qui réalise le produit du second signal en phase de l'oscillateur local 45 avec le signal porteuse. Les signaux issus de deux détecteurs de phase 46a et 46b sont couplés pour former un système de contre-réaction conçu pour maintenir l'oscillateur local 45 en synchronisme avec le signal porteuse. À cet effet, les signaux issus de chacun des détecteurs de phase 46a et 46b sont intégrés par un intégrateur 47a et 47b puis couplés dans un multiplieur 46c. Le signal de sortie du multiplieur 46c est réinjecté, après filtrage par un filtre de compensation 48, dans l'oscillateur local 45 de la boucle 40 du canal de la porteuse afin de réguler sa fréquence et sa phase. Le signal de sortie de l'intégrateur 47b qui reproduit les données de navigation de la porteuse est couplé dans des multiplieurs 56c, 66c respectivement aux signaux de sortie des intégrateurs 57, 67 pour fournir aux filtres de compensation 58, 68 des signaux indépendant des données contribuant à l'asservissement en fréquence et en phase des oscillateurs locaux 55, 65.

Le procédé de calibrage décrit plus haut peut être effectué à l'initialisation du module récepteur GNSS MR ou à la demande lorsque les conditions sont favorables et notamment lorsque le niveau de signal des satellites est élevé, en absence de brouillage, et lorsque la dynamique du porteur du récepteur est faible.

Le procédé de calibrage du temps de propagation des signaux dans le récepteur est par exemple déclenché de la manière suivante. La modulation d'amplitude étant initialement inactive, le module récepteur MR acquiert et poursuit les satellites GNSS en visibilité. Le module récepteur MR sélectionne le satellite offrant le meilleur rapport signal à bruit sur lequel l'opération de calibrage va être effectuée. Le module récepteur MR déclenche le procédé de calibrage du temps de propagation des signaux dans le récepteur et active à cet effet, le modulateur d'amplitude. Comme la fréquence du signal porteuse n'est pas affectée par la modulation d'amplitude, le canal ayant servi à acquérir le satellite choisi est naturellement positionné en fréquence sur le signal porteuse, Le module récepteur MR positionne en fréquence via l'allocateur de canaux, deux canaux supplémentaires sur les signaux correspondant aux sous-porteuses générées par la modulation d'amplitude. Le module récepteur MR synchronise et déclenche la poursuite des trois canaux sur le signal porteuse et les signaux sous-porteuse. Le module de traitement GNSS MT calcule le différentiel intégré des signaux de commande des oscillateurs des canaux alloués aux sous-porteuses et en déduit le temps de propagation des signaux GNSS dans le récepteur. Le module de traitement GNSS MT calcule la somme intégrée des signaux de commande des oscillateurs de ces mêmes canaux et vérifie l'absence de désynchronisation entre l'oscillateur du canal de la porteuse et les oscillateurs des canaux des sous-porteuses. Le module récepteur MR effectue éventuellement le même procédé sur d'autres satellites pour renforcer l'intégrité de la mesure. Le module de traitement GNSS MT arrête la modulation d'amplitude. Le module de traitement GNSS MT calcule les temps de propagation TP des signaux GNSS et donc les distances séparant le récepteur de chaque satellite en tenant compte des variations du temps de propagation $\tau$ des signaux GNSS dans chaque voie analogique V1 et V2 du récepteur.

Dans le cas d'un récepteur multi-constellations, le procédé de calibrage décrit plus haut est effectué pour chaque bande GNSS utilisée (LI, L2, L5 en GPS ; E1, E2, E5 en GALILEO).

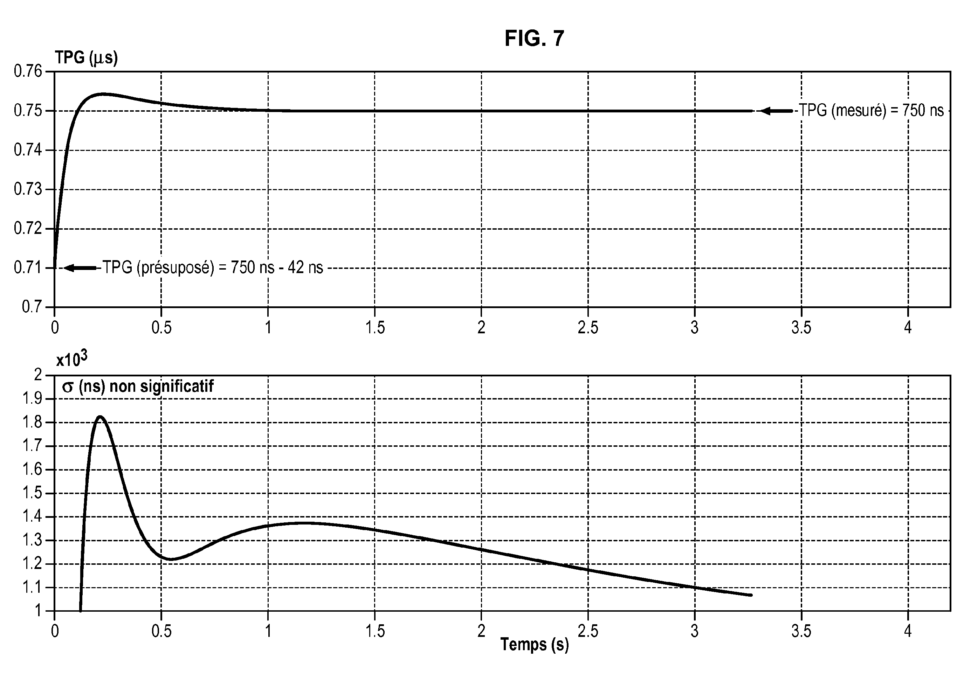

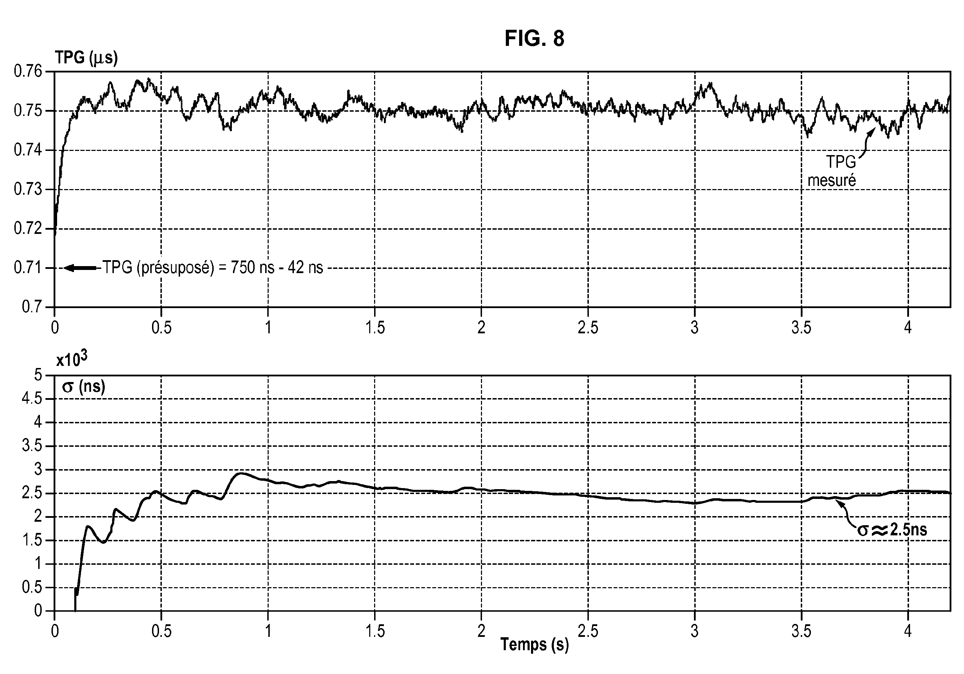

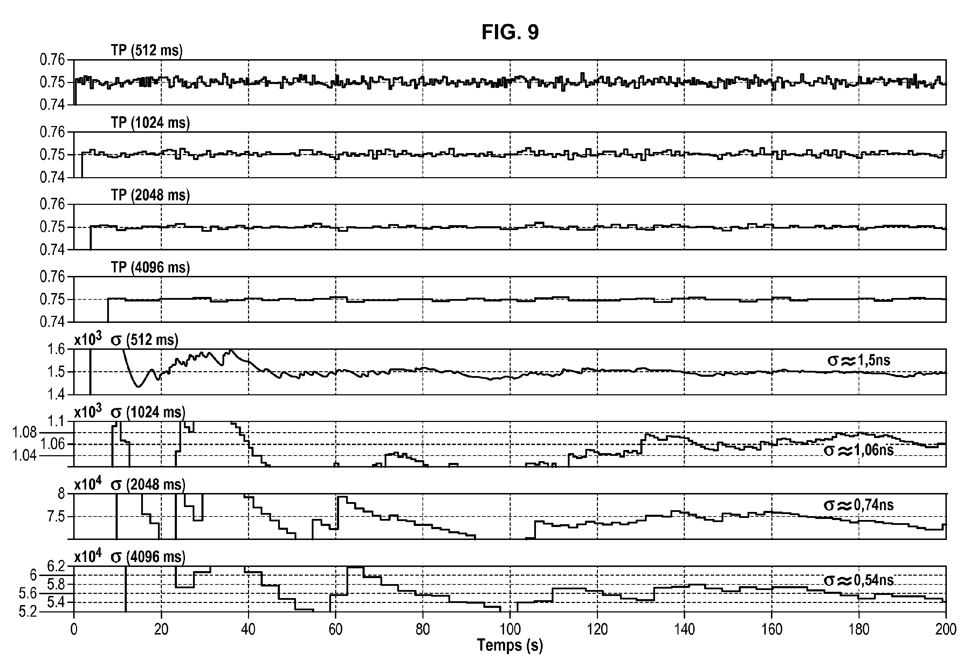

En référence aux figures 7, 8 et 9, on a représenté les résultats de simulation dans le cas d'un signal GPS dont le niveau est 10 dB au-dessous du niveau minimum donné par la norme IS-GPS-200 révision G. Les bandes passantes des boucles de poursuite du second ordre allouées à la porteuse et aux sous-porteuses sont respectivement de 5 Hz et de 0,5 Hz. Le facteur d'amortissement des boucles est de 0,5. Une erreur d'initialisation des boucles est faite au début des mesures pour simuler une incertitude sur la connaissance a priori du temps de propagation des voies analogiques du récepteur. Elle correspond à une incertitude de 42 ns du temps de propagation dont la valeur exacte est de 750ns.

La calibration du temps de propagation des signaux GNSS est effectuée grâce aux signaux reçus des satellites eux-mêmes. Il n'est pas nécessaire de générer un signal spécifiquement destiné au calibrage. Le procédé présente donc l'avantage de ne pas perturber le traitement des signaux GNSS.

Le procédé décrit est particulièrement adapté à des architectures de réception GNSS multi antennes comme celles utilisées sur de porteurs cylindriques tournants et qui imposent de connaître les temps de propagation dans toutes les voies analogiques du récepteur multi voies à quelques nanosecondes près.

Le procédé permet dans le cas d'un récepteur à voie unique d'améliorer la précision de datation offerte par les systèmes GNSS (service Precise Time and Time Interval) notamment grâce à la prise en compte par le signal 1 PPS OUT du temps de propagation absolue du récepteur.

Le procédé décrit permet une amélioration significative de la précision de localisation des récepteurs GNSS et évite le retour en usine pour calibration périodique.

**Revendications**

1. Procédé de calibrage d'un module récepteur GNSS (MR) comportant au moins deux entrées radiofréquence (E1, E2) adaptées pour recevoir des signaux GNSS à une ou plusieurs fréquences, un module de traitement GNSS (MT) adapté pour mesurer des temps de propagation (TP) des signaux GNSS entre le satellite émetteur et le module récepteur, et au moins deux voies analogiques (V1, V2) entre lesdites entrées radiofréquence (E1, E2) et le module de traitement (MT), **caractérisé en ce que** :

   - en amont de chaque voie analogique (V1, V2), on module en amplitude un signal GNSS par un signal de référence, de manière à générer un signal modulé comprenant une porteuse et au moins deux sous-porteuses différentes ;
   - en aval de chaque voie analogique (V1, V2), on mesure le différentiel de phase initiale ($\Delta\varphi0$) entre les au moins deux sous-porteuses différentes ;
   - on en déduit le temps de propagation du signal GNSS dans le récepteur ($\tau$) dans chaque voie analogique (V1, V2) du récepteur.

**2.** Procédé de calibrage selon la revendication précédente selon lequel on retranche à la mesure du temps de propagation (TP) entre le satellite émetteur et le module récepteur de chaque signal GNSS reçu, le temps de propagation du signal GNSS dans le récepteur (τ) dans la voie analogique (V1, V2) dans laquelle a circulé le dit signal GNSS.

**3.** Procédé de calibrage selon l'une des revendications précédentes, dans lequel au moins trois canaux (4, 5, 6) du module de traitement GNSS (MT) sont alloués à la poursuite en phase d'au moins trois signaux dont une porteuse et deux sous-porteuses différentes.

**4.** Procédé de calibrage selon la revendication précédente dans lequel les canaux (5, 6) alloués à la poursuite en phase des sous-porteuses du signal modulé comportent chacun un oscillateur (55, 65), la mesure du différentiel de phase initiale ($\Delta\varphi 0$) entre les deux sous-porteuses du signal modulé étant réalisée en intégrant le différentiel des signaux de commande des oscillateurs (65, 55) des canaux (5, 6) alloués à la poursuite en phase des deux signaux des deux sous-porteuses.

**5.** Procédé de calibrage selon l'une des revendications 3 et 4, dans lequel un canal (4) affecté à la poursuite d'une sous-porteuse principale apporte une aide en fréquence à des canaux (5, 6) affectés à la poursuite d'au moins une sous-porteuse secondaire.

**6.** Procédé de calibrage selon l'une des revendications 3 à 5, dans lequel une compensation des données de navigation est effectuée dans le canal (5, 6) d'au moins une sous-porteuse secondaire par le canal (4) de la porteuse principale.

**7.** Procédé de calibrage selon la revendication 4, dans lequel on vérifie la synchronisation des canaux (5, 6) affectés aux sous-porteuses en calculant la somme intégrée des commandes numériques des oscillateurs (55, 65) des canaux (5, 6) des sous-porteuses et en vérifiant que cette somme est proche de zéro.

**8.** Procédé de calibrage selon l'une des revendications précédentes, selon lequel on sélectionne parmi les signaux GNSS reçus par chaque entrées radiofréquence (E1, E2) le signal GNSS offrant le meilleur rapport signal sur bruit pour effectuer les étapes de mesure du différentiel de phase initiale et de déduction du temps de propagation des signaux GNSS dans le récepteur.

**9.** Procédé de calibrage d'un récepteur de positionnement selon l'une des revendications précédentes, selon lequel on réalise les étapes de modulation, de mesure du différentiel de phase initiale et de déduction du temps de propagation des signaux GNSS dans le récepteur, sur des signaux GNSS issus de plusieurs satellites.

**10.** Dispositif de calibrage d'un récepteur GNSS comportant au moins deux entrées radiofréquence (E1, E2) adaptées pour recevoir des signaux GNSS à une ou plusieurs fréquences, un module de traitement (MT) adapté pour mesurer des temps de propagation (TP) des signaux GNSS reçus, et au moins deux voies analogiques (V1, V2) entre lesdites entrées radiofréquence (E1, E2) et le module de traitement (MT), **caractérisé en ce qu'**il comporte en outre un modulateur d'amplitude (2) positionné en amont du récepteur (R) et adapté pour générer au moins trois signaux comportant une porteuse et deux sous-porteuses différentes; et **en ce que** le module de traitement (MT) est adapté pour mesurer le différentiel de phase initiale entre les au moins deux sous-porteuses différentes.

**11.** Dispositif de calibrage d'un récepteur GNSS selon la revendication précédente dans lequel le module de traitement (MT) comporte au moins trois canaux de poursuite (4, 5, 6) comportant chacun une boucle à verrouillage de phase (40, 50, 60) comportant chacune un oscillateur (45, 55, 65), le signal de commande numérique des oscillateurs (55, 65) étant transmis à deux entrées du soustracteur (7), la sortie du soustracteur étant transmise en entrée du filtre intégrateur (8).

**12.** Dispositif de calibrage d'un récepteur GNSS selon la revendication précédente dans lequel au moins une des boucles à verrouillage de phase (40) est une boucle de régulation de type boucle de Costas (48) qui démodule le signal de navigation et fournit aux boucles des sous-porteuses le signal de navigation démodulé.

**FIG. 1**

FIG. 2

FIG. 3

FIG. 4

EP 2 963 448 A1

12

**FIG. 5**

EP 2 963 448 A1

$\varphi=2.\pi.\tau.f_m$

∢ phase quelconque à l'initialisation

(sortie modulateur)  (sortie récepteur)  (après acquisition)  (après poursuite)

Signal GNSS modulé  Oscillateurs locaux des canaux

FIG. 6

FIG. 7

EP 2 963 448 A1

FIG. 8

FIG. 9

Europäisches
Patentamt

European
Patent Office

Office européen
des brevets

# RAPPORT DE RECHERCHE EUROPEENNE

Numéro de la demande

EP 15 17 4550

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2010/136498 A1 (DEUTSCH ZENTR LUFT & RAUMFAHRT [DE]; CUNTZ MANUEL [DE]; DENKS HOLMER []) 2 décembre 2010 (2010-12-02) * le document en entier * ----- | 1-12 | INV. G01S19/23 |
| A | DE 10 2012 205817 A1 (DEUTSCH ZENTR LUFT & RAUMFAHRT [DE]) 10 octobre 2013 (2013-10-10) * le document en entier * ----- | 1-12 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 11 novembre 2015 | Hirsch, Stefanie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 17 4550

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-11-2015

| Document brevet cité au rapport de recherche | Date de publication | Membre(s) de la famille de brevet(s) | Date de publication |
|---|---|---|---|
| WO 2010136498 A1 | 02-12-2010 | AUCUN | |
| DE 102012205817 A1 | 10-10-2013 | DE 102012205817 A1<br>EP 2836855 A1<br>US 2015078421 A1<br>WO 2013153061 A1 | 10-10-2013<br>18-02-2015<br>19-03-2015<br>17-10-2013 |

EPO FORM P0460

Pour tout renseignement concernant cette annexe : voir Journal Officiel de l'Office européen des brevets, No.12/82